(19) **Europäisches Patentamt**

**European Patent Office**

**Office européen des brevets**

(11) **EP 4 197 342 A1**

(12) # EUROPEAN PATENT APPLICATION

(43) Date of publication:
**21.06.2023 Bulletin 2023/25**

(21) Application number: **21215967.7**

(22) Date of filing: **20.12.2021**

(51) International Patent Classification (IPC):
*A23J 1/14* (2006.01)    *A23J 3/14* (2006.01)
*A23L 33/185* (2016.01)    *A23L 33/00* (2016.01)
*A23L 5/20* (2016.01)

(52) Cooperative Patent Classification (CPC):
**A23L 5/23; A23J 1/148; A23J 3/14; A23L 33/185**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **DSM IP Assets B.V.**
**6411 TE Heerlen (NL)**

(72) Inventors:
 • **HOUBEN, Klaartje**
  **6100 AA Echt (NL)**
 • **JAMALZADEH, Elaheh**
  **6100 AA Echt (NL)**
 • **VAN DEN BERG, Marco Alexander**
  **6100 AA Echt (NL)**

(74) Representative: **DSM Intellectual Property**
**P.O. Box 4**
**6100 AA Echt (NL)**

(54) **RAPESEED PROTEIN ISOLATE**

(57) The present invention relates to a native rapeseed protein isolate comprising a phytate content of 0.5 to 10 wt. % on dry matter of the rapeseed protein isolate.

EP 4 197 342 A1

## Description

### Field of the invention

The present invention relates to a native rapeseed protein isolate.

### Background of the invention

Rapeseed is one of the most important oilseeds in the world (number 3 after soybean and palm oil). Rapeseed contains high amounts of oil (30 to 45 %) and protein (20 to 30 %). However anti-nutritional compounds such as glucosinolates, polyphenols and phytic acid are also present in rapeseed. Therefore rapeseed has received less attention for human nutrition due to the presence of such anti-nutritional compounds. However newer technologies can now be used to eliminate such compounds.

Processing of rapeseed seeds for oil production provides oilseed cake, also known as oilseed meal, as a by-product from cold-pressing and optionally extracting oil from the rapeseed seeds. The oilseed cake has a high-protein content which can be further extracted to produce rapeseed protein isolate.

Rapeseed protein isolate is now being suggested as an alternative to other proteins for human food use due to having a balanced amino acid profile on par with many animal proteins and superior to most vegetable proteins. Furthermore native rapeseed protein isolate has good potential functional properties such as emulsifying, foaming and gelling abilities. All these properties suggest that rapeseed seeds are a valuable source of high-quality protein isolate for utilization in the food processing industry, and can also be used as a good alternative to soybean derivatives and other plant and animal products.

The use of vegetable based protein in human nutrition is known, and for example WO 2008/094434 discloses the use of wheat protein isolates as an alternative to the use of egg yolk protein in compositions. However the use of wheat protein isolates may not be desirable for those with gluten allergies.

Rapeseed (Brassica Napus), also known as rape, oilseed rape, rapa, rappi, rapaseed (and in the case of one particular group of cultivars, canola) is a bright yellow flowering member of the family Brassicaceae (mustard or cabbage family), (Wanasundara, 2011). Following pollination, rapeseed plants form an elongated pod with two chambers separated by a membrane with a single row of seeds within each chamber. The pods are contain 15 to 30 small, spherical seeds. The seeds of the Brassica Napus species are brown to black when mature. There are about 115,000 seeds per pound. Seeds are about 0.8 to 2.4 mm in diameter and although seed size may vary with variety and environmental effects the variation is minor when compared to the size and shape of an elongated wheat grain approximately 6 mm in length and 3 to 3.5 mm in width.

Switching from an animal protein to plant protein comes with many challenges, like texture, flavour, colour, solubility etc. Particularly, plant proteins might provide undesired plant protein flavours, such as characteristic odour, characteristic taste, lingering taste or astringency.

Rapeseed is unfortunately no exception to that. Particularly, rapeseed protein isolates might have undesired plant protein flavours as well as certain food applications containing the rapeseed protein isolate, which will make these food products less appreciated by the consumer. Hence there is a need in the art for a rapeseed protein isolate that solves these problems.

### Detailed description of the invention

This objective, amongst other objectives, is met by the native rapeseed protein isolate according to the appended claims.

Specifically, this objective, amongst other objectives, is met by providing a native rapeseed protein isolate comprising a phytate content of 0.5 to 10wt. % on dry matter of the rapeseed protein isolate.

Surprisingly, the present inventors found that adding phytate to the rapeseed protein isolate reduces the astringency of the rapeseed protein.

The rapeseed protein isolate of the invention is native rapeseed protein isolate. By native is meant that the protein is not deliberately hydrolysed and that the protein is in its properly folded shape (in its native "conformation" or "structure").

The term isolate means that on a dry basis, 85 wt. % of the total weight of the isolate is protein. This is calculated using the Dumas method with a nitrogen conversion factor of 6.25. Or using nitrogen content determination method such as Dumas combustion. Typically, the non-protein content of the protein isolate includes non-protein compounds such as anti-nutritional substances, fibre and other components.

Phytate and phytic acid can be used interchangeably herein.

In a preferred embodiment, the present native protein isolate has a protein content of at least 90 wt.% (calculated as Dumas N x 6.25) on a dry weight basis, preferably at least 91, 92, 93, 94, 95, 96, 97, 98, or at least 99 wt.% on a dry weight basis (calculated as Dumas N x 6.25).

Preferably, the amount of protein and phytate do not exceed 100 wt. % of the protein isolate. However, when using the Dumas method with a nitrogen conversion factor of 6.25 the amount of protein can be overestimated reaching a percentage above 100%. Although Nx6.25 is the worldwide standard in commerce, scientists recognise that this overstates the value of plant proteins. The recognized nitrogen conversion factor for soy protein is Nx5.71, but there is currently no such recognised factor for rapeseed.

In a preferred embodiment, the present native rapeseed protein isolate comprises a phytate content of 1.1 to 8.0 wt. % on dry matter of the rapeseed protein isolate.

Preferably, the amount of phytate is 1.2 to 7.5 wt. %, 1.3 to 7.0 wt. %, 1.4 to 6.5 wt. %, 1.5 to 6.0 wt. % on dry matter of the rapeseed protein isolate.

In a preferred embodiment, the present native rapeseed protein isolate comprises a phytate content of 1.6 to 8.0 wt. % on dry matter of the rapeseed protein isolate.

Preferably, the amount of phytate is 1.7 to 7.5 wt. %, 1.8 to 7.0 wt. %, 1.9 to 6.5 wt. %, 2.0 to 6.0 wt. % on dry matter of the rapeseed protein isolate.

In a preferred embodiment, the present native rapeseed protein isolate comprises a phytate content of 2.0 to 5.0 wt. % on dry matter of the rapeseed protein isolate.

Preferably, the amount of phytate is 2.1 to 5.5 wt. %, 2.2 to 5.3 wt. %, 2.3 to 5.0 wt. %, 2.4 to 4.8 wt. %, 2.5 to 4.5 wt. %, 2.8 to 4.3 wt. %, 3.0 to 4.5 wt. % or 3.0 to 4.0 wt. % on dry matter of the rapeseed protein isolate.

In a preferred embodiment, the present phytate or phytic acid is the six-fold dihydrogenphosphate ester of inositol (specifically, of the myo isomer), also called inositol hexakisphosphate (IP6) or inositol polyphosphate. At physiological pH, the phosphates are partially ionized, resulting in the phytate anion. Next to the IP6, also the lower inositol phosphates, i.e., inositol esters with less than six phosphates such as inositol pentaphosphate (IP5), tetraphosphate (IP4), triphosphate (IP3), diphosphate (IP2) and monophosphate (IP1), or the unphosphorylated (myo-)inositol can be present in the composition.

In a preferred embodiment, the present phytate or phytic acid or inositol phosphates are derived from a plant or microbial source. Preferably, the plant source is a legume such as lupin, pea (yellow pea, green pea), bean (such as soybean, fava (faba) bean, kidney bean, green bean, haricot bean, pinto bean, mung bean, adzuki bean), chickpea, lupin, lentil. Alternatively, the plant source is a cereal such as maize, corn, oat, wheat, rye, barley, millet. Alternatively, the plant source is a nut or seed, such as sesame seeds, rapeseed seeds, linseeds, peanuts or sunflower seeds. Alternatively, the plant source is a fruit such as apple or orange.

In a preferred embodiment, the present phytate or phytic acid or inositol phosphates are included as salts. Preferably, the salts are sodium salts.

In a preferred embodiment, the enzyme phytase can be used to (partially) hydrolyze the inositol-phosphate linkages and optimize the composition of the various inositol molecules (IP0, IP1, IP2, IP3, IP4, IP5 and/or IP6) to optimize the effect of the present invention, i.e., the reduction of astringency of the rapeseed protein.

In a preferred embodiment, the present native rapeseed isolate further comprises an oil content of 1 to 5 wt. % on dry matter of the rapeseed protein isolate or of 0.5 to 10 wt. % on dry matter of the rapeseed protein isolate.

In the context of the present invention, the term 'oil' means an oil that is liquid at room temperature. Preferably the oil is a plant oil.

In a preferred embodiment, the oil is chosen from the group consisting of rapeseed oil, avocado oil, corn oil, olive oil, soya bean oil, sunflower oil, grapeseed oil, palm oil, peanut oil, walnut oil, coconut oil, line seed oil, camelina oil, groundnut oil, cotton seed oil, safflower oil, sesame oil and rice bran oil.

In a preferred embodiment, the present native rapeseed protein isolate comprises an oil content of 1.5 to 4 wt. % on dry matter of the rapeseed protein isolate.

In a preferred embodiment, the present native rapeseed protein isolate comprises an oil content of to 1.6 to 3.5 wt. % on dry matter of the rapeseed protein isolate.

Preferably, the amount of oil is 2 to 3.5 wt. %, preferably 2.5 to 3.0 wt. % on dry matter of the rapeseed protein isolate.

Preferably, the amount of oil is 0.5, 1, 1.5, 2, 2.5, 3, 3.5, 4, 4.5, 5, 5.5, 6, 6.5, 7, 7.5, 8, 8.5, 9, 9.5 and/or 10 wt. % on dry matter of the rapeseed protein isolate.

In a preferred embodiment, the present native rapeseed protein isolate comprises saturated fatty acids, unsaturated fatty acids, omega fatty acids and/or trans fatty acids. Preferably, the present oil comprises saturated fatty acids, unsaturated fatty acids, omega fatty acids and/or trans fatty acids. Preferably, the saturated fatty acids comprise caproic acid, caprylic acid, capric acid, lauric acid, myristic acid, palmitic acid, stearic acid and/or arachidic acid. Preferably, the unsaturated fatty acids comprise monounsaturated (MUFA) and/or polyunsaturated fatty acids (PUFA). Preferably, the monounsaturated fatty acids comprise palmitoleic acid, oleic acid and/or erucic acid. Preferably, the omega fatty acids comprise omega-9 fatty acids, omega-6 fatty acids and/or omega-3 fatty acids. Preferably, the omega-3 fatty acids comprise eicosapentaenoic acid, docosahexaenoic acid, alpha-linolenic acid, hexadecatrienoic acid, stearidonic acid, eicosatrienoic acid, eicosatetraenoic acid, heneicosapentaenoic acid, docosapentaenoic acid, tetracosapentaenoic and/or tetracosahexaenoic acid. Preferably, the omega-6 fatty acids comprise linoleic acid, gamma-linoleic acid, arachidonic acid, docosatetraenoic acid, tetracosatetraenoic acid, tetracosapentaenoic acid and/or docosapentaenoic acid.

Preferably the present oil content is determined by FAME analysis, calculated as sum of individual fatty acids expressed as triglyceride equivalents, preferably according to AOAC method 996.06 (Association of Official Analytical Chemists).

The predominant storage proteins found in rapeseed seeds are cruciferins and napins. Cruciferins are globulins and are the major storage protein in the seed. Cruciferin is composed of 6 subunits and has a total molecular weight of approximately 300 kDa. Napins are albumins and are a low molecular weight storage protein with a molecular weight of approximately 14 kDa. Napins are more easily solubilized and in for example EP 1715752 a process is disclosed to separate out the more soluble napin fraction, preferably to at least 85 wt.%. Napins are primarily proposed for use in applications where solubility is key.

Rapeseed proteins can be also divided into various fractions according to the corresponding sedimentation coefficient in Svedberg units (S). This coefficient indicates the speed of sedimentation of a macromolecule in a centrifugal field. For canola proteins, the main reported fractions are: 12S, 7S and 2S. Napin is a 2 S albumin, and cruciferin is a 12 S globulin.

In a preferred embodiment, the present native rapeseed protein isolate comprises 40 to 65 wt. % cruciferins and 35 to 60 wt. % napins. Preferably, the present native rapeseed protein isolate comprises 40 to 55 wt. % cruciferins and 45 to 60 wt. % napins.

In a preferred embodiment, the present native rapeseed protein isolate comprises 60 to 80 wt. % cruciferins and 20 to 40 wt. % napins. Preferably, the present native rapeseed protein isolate comprises 65 to 75 wt. % cruciferins and 25 to 35 wt. % napins.

In a preferred embodiment, the present native rapeseed protein isolate comprises 0 to 10 wt. % cruciferins and 90 to 100 wt. % napins. Preferably, the present native rapeseed protein isolate comprises 1 to 5 wt. % cruciferins and 95 to 100 wt. % napins.

Preferably, the amounts of cruciferins and napins are calculated based on the total amount of protein in the present isolate. Or alternatively, the amounts of cruciferins and napins are calcuated based on the sum of cruciferins and napins. Preferably, the amounts of cruciderins and napins are determined by size exclusion chromatography (SEC). Preferably, the amounts of cruciderins and napins are determined by size exclusion chromatography (SEC) using the following test:

samples of protein isolate are dissolved in a 500 mM NaCl saline solution and analyzed by High Performance SEC using the same solution as the mobile phase, followed by detection using UV absorbance at 220 nm, wherein the relative contribution of cruciferin and napin (wt. %) was calculated as the ratio of the peak area of each protein with respect to the sum of both peak areas, and absolute quantitation of cruciferin and napin was calculated using the response factor determined with a bovine serum albumin protein solution as an external calibration standard.

Preferably, the present native rapeseed protein isolate comprises 40 to 65 wt. % 12S and 35 to 60 wt. % 2S. Preferably, the present native rapeseed protein isolate comprises 40 to 55 wt. % 12S and 45 to 60 wt. % 2S.

In a preferred embodiment, the present native rapeseed protein isolate comprises 60 to 80 wt. % 12S and 20 to 40 wt. % 2S. Preferably, the present native rapeseed protein isolate comprises 65 to 75 wt. % 12S and 25 to 35 wt. % 2S.

In a preferred embodiment, the present native rapeseed protein isolate comprises 0 to 10 wt. % 12S and 90 to 100 wt. % 2S. Preferably, the present native rapeseed protein isolate comprises 1 to 5 wt. % 12S and 95 to 100 wt. % 2S.

Preferably, the amounts of 12S and 2S is determined by sedimentation velocity analytical ultracentrifugation (SV-AUC) analysis. Preferably, the amounts of 12S and 2S is determined by sedimentation velocity analytical ultracentrifugation (SV-AUC) analysis using the following test:

samples of protein isolate are dissolved in a 3.0% (or 500 mM) NaCl saline solution and amounts determined using interference optics, as described in example 19 of patent US 8,623,445.

In a preferred embodiment, the present native rapeseed protein isolate comprises a conductivity in a 2 wt.% aqueous solution of less than 9000 $\mu$S/cm over a pH range of 2 to 12. More preferably the conductivity of the native rapeseed protein isolate in a 2 wt. % aqueous solution is less than 4000 $\mu$S/cm over a pH range of 2.5 to 11.5. For comparison the conductivity of a 5 g/l NaCl aqueous solution is around 9400 $\mu$S/cm. Preferably conductivity is measured with a conductivity meter, for example Hach senslON+ EC71.

In a preferred embodiment, the present native rapeseed protein isolate comprises a solubility of at least 88 % when measured over a pH range from 3 to 10 at a temperature of 23 +/-2 °C. Preferably a solubility of at least 90, 91, 92, 93, 94, 95, 96, 97, 98 or at least 99% over a pH range from 3 to 10 at a temperature of 23 +/-2 °C. This is also known as the soluble solids index (SSI).

Preferably, solubility is calculated by:

$$\text{Protein solubility (\%)} = \text{(concentration of protein in supernatant (in g/l)} / \text{concentration of protein in total dispersion (in g/l))} \times 100.$$

Preferably, the solubility is measured using the following test:

- sufficient protein isolate to supply 0.8 g of protein is weighed into a beaker;
- a small amount of demineralized water is added to the powder and the mixture is stirred until a smooth paste is formed;
- additional demineralized water is then added to make a total weight of 40 g (yielding a 2 % w/w protein dispersion);
- the dispersion is slowly stirred for at least 30 min using a magnetic stirrer;
- afterwards the pH is determined and adjusted to the desired level (2, 3, 4, etc.) with NaOH or HCl;
- the pH of the dispersion is measured and corrected periodically during 60 minutes stirring;
- after 60 minutes of stirring, an aliquot of the protein dispersion is reserved for protein concentration determination (Kjeldahl or Dumas analysis; N x 6.25), another portion of the sample is centrifuged at 20,000 G for 2 min;
- the supernatant and pellet are separated after centrifugation;
- the protein concentration of the supernatant is also determined by Kjeldahl or Dumas analysis (N x 6.25);
- and protein solubility is calculated by:

$$\text{Protein solubility (\%)} = \text{(concentration of protein in supernatant (in g/l)} / \text{concentration of protein in total dispersion (in g/l))} \times 100.$$

In a preferred embodiment, the present native rapeseed protein isolate has a phytate level less than 5 wt.%, preferably less than, 4, 3, 2, 1, 0.5, 0.4, 0.3, 0.2. 0.1 or less than 0.01 wt. %. Alternatively, the present native rapeseed protein isolate has a phytate level of 0.01 to 4, 0.05 to 3, 0.1 to 1 wt.%. Preferably the phytate level is measured using Eurofins method QD495, based on Ellis et al, Analytical Biochemistry Vol. 77:536-539 (1977), or $^{31}$P-NMR determination.

In a preferred embodiment, the present native rapeseed protein isolate has a phenolic content of less than 1 wt.% on dry matter expressed as sinapic acid equivalents. Preferably less than 0.9, 0.8, 0.7, 0.6, 0.5, 0.4, 0.3, 0.2, 0.1, 0.05 or less than 0.01 wt.% on dry matter expressed as sinapic acid equivalents.

In a preferred embodiment, the present native rapeseed protein isolate comprises < 10 ppm gliadin. Preferably the native rapeseed protein isolate comprises less than 5 ppm gliadin and most preferably no gliadin can be detected. Preferably, gliadin content is determined using sandwich ELISA from R-Biopharm (cat no R7001, lot 14434) used according to the manufacturer's instructions to determine the gliadin ppm in extracts.

Preferably, the present native rapeseed protein isolate comprises an amount of moisture of less than 10%, such as less than 9, 8, 7, 6, 5, 4, 3, 2, or 1%.

The native rapeseed protein isolate of the invention can be made by for example blending the present rapeseed protein isolate with the present phytate, up to the desired amounts.

According to another aspect, the present invention relates to a food product comprising a native rapeseed protein isolate as defined herein.

The invention is further illustrated in the example below, wherein reference is made to the figures.

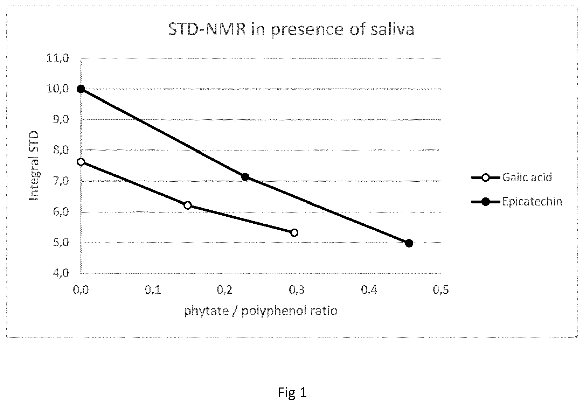

Figure 1: shows Integrals of aromatic signals from the phenolic compound in the STD-NMR spectrum as function of phytate concentration. For gallic acid a concentration of 15 mM was used, for epicatechin 5 mM was used.

## Examples

### Example 1

Saturation Transfer Difference Nuclear Magnetic Resonance (STD-NMR) was used to study mitigation of saliva-polyphenol interactions by phytate [as described by Soares et al. Food Chemistry 243 (2018) 175-85: Study of human salivary proline-rich proteins interaction with food tannins]. Saliva was collected from different donors, pooled, freeze-dried, dissolved in D2O, aliquoted and supplemented with -10 mM of a (poly)phenol compound, such as gallic acid (Merck/Sigma-Aldrich G7384) or epicatechin (Merck/Sigma-Aldrich E1753). STD-NMR data was recorded to confirm interaction of the phenolic compounds with the saliva proteins, which is an in vitro method to demonstrate astringency.

A recycle delay of 3 seconds was used, during which a 2 second 50 Hz saturation pulse was applied either off-resonance (20 ppm) for the reference spectrum or on-resonance (0 ppm) for the saturation spectrum. The data was recorded in an interleaved fashion 56 scans were used to accumulate enough signal intensity. Next, the difference spectrum (the reference spectrum minus the saturation spectrum) was computed, which confirmed the interaction of both gallic acid and epicatechin with the saliva proteins. Sucrose was used as a negative control, where indeed no interaction with the saliva proteins was observed.

Next, samples were prepared with -10 mM of the (poly)phenol compound with varying ratios of sodium phytate (Merck/Sigma-Aldrich 68388). The aromatic signals of the phenolic compound in the STD-NMR spectrum were integrated and these values were plotted as a function of (poly)phenol : phytate ratio. This clearly shows that the interaction of the (poly)phenol compound with saliva proteins is increasingly reduced by presence of phytate (Figure 1).

**Example 2**

Rapeseed protein isolate (RPI) was prepared from cold-pressed rapeseed oil seed meal as described in WO 2018/007492; the protein content was 90% (w/w). The resultant rapeseed protein isolate comprised in the range of from 40 to 65% (w/w) cruciferins and 35 to 60% (w/w) napins, contained less than 0.26% (w/w) phytate and had a solubility of at least 88% when measured over a pH range from 3 to 10 at a temperature of $23\pm2°C$. Phytate was obtained from Sigma-Aldrich: Phytic acid sodium salt hydrate, P8810-25 gram.

Four grams of RPI was weighed in to a flask and mixed with various amounts of phytate, and water was added to fill up to 200 gram (see table 1 below). The mixtures were stirred for 30 mins at room temperature, and aliquots were subsequently used for sensory evaluation of the taste intensity and odor intensity. A panel of 5 members rated the mixture aliquots on a scale from 1 (low intensity) to 10 (high intensity). Surprisingly, the addition of phytate to the rapeseed protein isolate reduces the intensity of undesired plant protein flavour of the isolate, such as characteristic odor and characteristic taste, i.e. astringency.

Table 1

| Sample | RPI (g) | Phytate (mg) | Water (ml) | %Phytate on RPI | Relative Taste intensity | Relative Odor intensity |
|---|---|---|---|---|---|---|
| Control | 4 | 0 | 196 | 0 | 10 | 10 |
| A | 4 | 25 | 196 | 0.625 | 7 | 7 |
| B | 4 | 50 | 196 | 1.25 | 6 | 7 |
| C | 4 | 100 | 196 | 2.5 | 3 | 4 |
| D | 4 | 200 | 196 | 5 | 1 | 2 |

**Claims**

1. A native rapeseed protein isolate comprising a phytate content of 0.5 to 10 wt. % on dry matter of the rapeseed protein isolate.

2. A native rapeseed protein isolate according to claim 1, comprising a phytate content of 1.6 to 8.0 wt. % on dry matter of the rapeseed protein isolate.

3. A native rapeseed protein isolate according to claim 1 or 2, comprising a phytate content of 2.0 to 5.0 wt. % on dry matter of the rapeseed protein isolate.

4. A native rapeseed protein isolate according to any of the preceding claims, with a protein content of at least 90 wt.% (calculated as Dumas N x 6.25) on a dry weight basis.

5. A native rapeseed protein isolate according to any of the preceding claims comprising 40 to 65 wt. % cruciferins and 35 to 60 wt. % napins.

6. A native rapeseed protein isolate according to any of the preceding claims comprising 60 to 80 wt. % cruciferins and 20 to 40 wt. % napins.

7. A native rapeseed protein isolate according to any of the preceding claims comprising 0 to 10 wt. % cruciferins and 90 to 100 wt. % napins.

8. A native rapeseed protein isolate according to any of the preceding claims with a conductivity in a 2 wt.% aqueous solution of less than 9000 µS/cm over a pH range of 2 to 12.

9. A native rapeseed protein isolate according to any of the preceding claims with a solubility of at least 88 % when measured over a pH range from 3 to 10 at a temperature of 23 +/-2 °C.

10. A native rapeseed protein isolate according to any of the preceding claims, further comprising an oil content of 0.5 to 10 wt. % on dry matter of the rapeseed protein isolate.

11. A native rapeseed protein isolate according to any of the preceding claims, further comprising an oil content of 1 to 5 wt. % on dry matter of the rapeseed protein isolate.

12. A native rapeseed protein isolate according to any of the preceding claims having a phenolic content of less than 1 wt.% on dry matter expressed as sinapic acid equivalents.

13. A native rapeseed protein isolate according to any of the preceding claims, comprising < 10 ppm gliadin.

14. A food product comprising a native rapeseed protein isolate according to anyone of claims 1 to 13.

Fig 1

Europäisches
Patentamt

European
Patent Office

Office européen
des brevets

**EUROPEAN SEARCH REPORT**

Application Number

EP 21 21 5967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/137134 A1 (WNUKOWSKI PIOTR [NL] ET AL) 13 May 2021 (2021-05-13) * Table 4, Run 1b; Table 9, Run 2b; paragraphs [0005], [0010], [0012], [0094] – [0097], [0107] – [0111]; figure 2; examples 1,2; tables 4,9,13 * ----- | 1-4,6, 8-14 | INV. A23J1/14 A23J3/14 A23L33/185 A23L33/00 A23L5/20 |
| X | MEJIA L A ET AL: "A 13-week dietary toxicity study in rats of a Napin-Rich Canola Protein Isolate", REGULATORY TOXICOLOGY AND PHARMACOLOGY, ACADEMIC PRESS,NEW YORK, NY, US, vol. 55, no. 3, 17 September 2009 (2009-09-17), pages 394-402, XP026722133, ISSN: 0273-2300, DOI: 10.1016/J.YRTPH.2009.09.008 [retrieved on 2009-09-17] * items 2.1 and 2.2; page 395; table 1 * ----- | 1-3,7, 12-14 | |
| X | WITCZAK M ET AL: "Rapeseed protein as a novel ingredient of gluten-free dough: Rheological and thermal properties", FOOD HYDROCOLLOIDS, ELSEVIER BV, NL, vol. 118, 13 April 2021 (2021-04-13), pages 1-10, XP086555999, ISSN: 0268-005X, DOI: 10.1016/J.FOODHYD.2021.106813 [retrieved on 2021-04-13] * items 2.1, 2.2.1; page 2 * ----- -/-- | 1,4,13, 14 | TECHNICAL FIELDS SEARCHED (IPC) A23L A23J |

The present search report has been drawn up for all claims

| Place of search | Date of completion of the search | Examiner |
|---|---|---|
| Munich | 4 April 2022 | Muller, Isabelle |

EPO FORM 1503 03.82 (P04C01)

Europäisches
Patentamt

European
Patent Office

Office européen
des brevets

# EUROPEAN SEARCH REPORT

Application Number

EP 21 21 5967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHMIELEWSKA ANNA ET AL: CRITICAL REVIEWS IN FOOD SCIENCE AND NUTRITION , 10 September 2020 (2020-09-10), pages 1-21, XP055783398, USA ISSN: 1040-8398, DOI: 10.1080/10408398.2020.1809342 Retrieved from the Internet: URL:https://www.researchgate.net/profile/Justyna_Rosicka/publication/344221948_Canolarapeseed_protein_-_nutritional_value_functionality_and_food_application_a_review/links/5fa57f8f299bf10f7329289b/Canola-rapeseed-protein-nutritional-value-functionality-and-food-application-a-review.pdf [retrieved on 2022-03-16] * page 4, left-hand column, paragraph 2; table 1 * ----- | 1,4,5,7, 9-14 | |
| A | Anonymous: "CanolaPRO(TM) Rapeseed/Canola Protein Turning a by-product into a highly valuable food ingredient", , 11 April 2021 (2021-04-11), pages 1-11, XP055903727, Retrieved from the Internet: URL:https://web.archive.org/web/20210411062838if_/https://future-food.dk/wp-content/uploads/2020/01/Future-food-processing-Presentation-CanolaPro-gen-Jan-2020.pdf [retrieved on 2022-03-21] * pages 5,7 * ----- -/-- | 1,4,5,7, 9-14 | TECHNICAL FIELDS SEARCHED (IPC) |

The present search report has been drawn up for all claims

| Place of search | Date of completion of the search | Examiner |
|---|---|---|
| Munich | 4 April 2022 | Muller, Isabelle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

**Application Number**

**EP 21 21 5967**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JANITHA P.D. WANASUNDARA ET AL: "Canola/rapeseed protein-functionality and nutrition", OCL, vol. 23, no. 4, 2016, page D407, XP055304289, ISSN: 2272-6977, DOI: 10.1051/ocl/2016028 * item 6.1; page 7; table 2 * | 1-14 | |

TECHNICAL FIELDS
SEARCHED      (IPC)

The present search report has been drawn up for all claims

| Place of search | Date of completion of the search | Examiner |
|---|---|---|
| Munich | 4 April 2022 | Muller, Isabelle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 197 342 A1**

## ANNEX TO THE EUROPEAN SEARCH REPORT
## ON EUROPEAN PATENT APPLICATION NO.

EP 21 21 5967

04-04-2022

| Patent document cited in search report | | Publication date | Patent family member(s) | | Publication date |
|---|---|---|---|---|---|
| US 2021137134 | A1 | 13-05-2021 | AU 2018299924 | A1 | 16-01-2020 |
| | | | CA 3067115 | A1 | 17-01-2019 |
| | | | CN 110891428 | A | 17-03-2020 |
| | | | EP 3651586 | A1 | 20-05-2020 |
| | | | JP 2020526204 | A | 31-08-2020 |
| | | | US 2021137134 | A1 | 13-05-2021 |
| | | | WO 2019011904 | A1 | 17-01-2019 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008094434 A
- EP 1715752 A
- US 8623445 B
- WO 2018007492 A

**Non-patent literature cited in the description**

- **ELLIS et al.** *Analytical Biochemistry,* 1977, vol. 77, 536-539
- **SOARES et al.** *Food Chemistry,* 2018, vol. 243, 175-85